# EUROPEAN PATENT APPLICATION

(11) **EP 4 070 927 A1**
(43) Date of publication of application: **12.10.2022**
(21) Application number: 21170589.2
(22) Date of filing: 27.04.2021
(51) Int. Cl.: B26F 3/00, B25J 9/00, B25J 11/00, B25J 18/00, B25J 19/00, B24C 1/04

(54) **CUTTING HEAD**

(30) Priority: 08.04.2021 IT 202100008861
(71) Applicant: Stacmol Ricerca E Sviluppo S.r.l., 04100 Latina (IT)
(72) Inventor: STACCONE, Stefano, 04100 Latina (IT)
(74) Representative: Leganza, Alessandro

(57) **Abstract**

Cutting head (1) for 5-axis waterjet cutting machine comprising an anchoring base (2), a forearm (3) and a wrist (4); the anchoring base (2) is rotatably coupled to a forearm (3) which is in turn rotatably coupled to the wrist (4) and is configured to support a cutting assembly (5); the forearm (3) rotates with respect to the anchoring base (2) about a first rotary axis (C) and the wrist (4) rotates with respect to the forearm (3) about a second rotary axis (A); wherein the forearm (3) and the wrist (4) have a lattice structure comprising full portions and empty (11) portions through which one or more cables/pipes pass.

A 5-axis waterjet cutting machine (100) comprising a cutting head (1) according to the present invention.

## Description

### TECHNICAL FIELD

The present invention relates to a hinged cutting head for 5-axis mechanical processing machines. Notably, it relates to a cutting head for a waterjet machine, i.e. a waterjet cutting machine.

### BACKGROUND

In the background art several types of numerical control machines for cutting materials are known. Notably, waterjet cutting machines, commonly referred to as waterjet, are known.

Water cutting is an industrial use technology used for cutting a wide variety of materials by means of high-pressure water, with possible adduction of abrasive material. Water cutting is known for its ability to cut extremely hard and highly thick materials, which are normally non-machinable with other technologies. Cutting is performed at an extremely high pressure, up to 7000 bar, and may be performed only with water or with water to which abrasive material is added. By using only water, it is possible to cut food materials, otherwise, by using water with abrasive material, it is possible to cut very hard materials such as marble or iron.

The need to make cuts with particular shapes has led the main manufacturers to design and produce rotating cutting heads, which can be inclined differently from the orthogonal standard with respect to the surface of the piece to be cut.

This type of cutting heads, besides comprising mutually movable components, must involve the passage of high pressure tubes and cables, notably electric cables and water, air and abrasive material tubes. Furthermore, these cutting heads must be light, easily maintainable, safe and have enough structural rigidity not to create processing defects on the piece to be cut.

In the background art there are no cutting heads for waterjet machines capable of solving all the drawbacks expressed above.

### SUMMARY

The above-mentioned drawbacks of the prior art are now solved by a first scope of the present invention which consists in a cutting head for a 5-axis waterjet cutting machine comprising an anchoring base, a forearm and a wrist. The anchoring base is rotatably coupled to a forearm which in turn is rotatably coupled to the wrist and is configured to support a cutting assembly. The forearm rotates with respect to the anchoring base about a first rotary axis and the wrist rotates with respect to the forearm about a second rotary axis. The forearm and the wrist have a lattice structure comprising full portions and empty portions through which one or more cables/pipes pass. The cutting head thus devised, by maintaining the required operational and safety standards, decreases the risks of breakage of its components and reduces the weight of the cutting head. Furthermore, the cutting head thus devised allows a 360-degree rotation about two axes.

Preferably the anchoring base may be rotatably coupled to the forearm through a first connecting rod that is axially holed for allowing the passage of cables/pipes. This type of coupling simplifies the shape of the forearm and therefore its manufacturing. More preferably the first connecting rod may be firmly coupled to the forearm and rotatably coupled to the anchoring base. This clamping of the first connecting rod allows to arrange the handling equipment of the forearm high above with respect to the cutting point. Furthermore, this architecture allows the passage of ducts and cables required for operating the cutting head.

Notably, the forearm may be rotatably coupled to the wrist through a second connecting rod that is axially holed for allowing the passage of cables/pipes. This coupling between the wrist and the forearm through the second connecting rod allows a constructional simplification of the wrist and of the forearm. Preferably the second connecting rod is firmly coupled to the wrist and rotatably coupled to the forearm. In this way, the handling equipment of the wrist with respect to the forearm can be arranged upward, without hindering the area in which the cut takes place. Furthermore, this architecture allows the passage of ducts and cables required for operating the cutting head.

Advantageously, the anchoring base may comprise a central hole for receiving the first connecting rod so that a first pulley connected to the first rod comes out from the anchoring base. This construction form allows to arrange the handling equipment of the forearm away from the cutting area. Furthermore, this architecture allows the passage of ducts and cables for the cutting assembly. Preferably, the anchoring base is made of a titanium alloy in order to optimize the weight and the structural strength of the component.

Notably, the wrist may comprise a first hole for anchoring the first connecting rod, a second hole for the passage of cables/pipes and a clamping portion for connecting the cutting assembly. With this conformation, the passage of pressurized water adduction pipes and of electric cables is optimized.

Advantageously, the forearm may comprise a primary hole for receiving the second connecting rod so that a second pulley connected to the second connecting rod comes out from the forearm, a secondary hole for anchoring the first connecting rod and a tertiary hole for receiving a motor so that a third pulley driven by the motor and coupled through a transmission to the second pulley comes out from the forearm. With this conformation, the passage of pressurized water adduction pipes and of electric cables is optimized. Furthermore, the handling of the wrist through said motor results simplified and does not create interferences with the movement of the cutting head.

Preferably, the forearm and the wrist may be made of a titanium alloy in order to maximize the lightness and the strength of the components.

Notably, the forearm and the wrist are realized through three-dimensional printing. This component manufacturing method allows to obtain a matrix lattice structure which lightens the components, while maintaining the structural features unchanged.

Furthermore, the first rotary axis intersects the second rotary axis in a focal point of the cutting assembly. In this way, the movements of the head maintain the focal point from which the water jet comes out of the cutting assembly fixed.

A second scope of the present invention is to provide a 5-axis waterjet cutting machine comprising a cutting head according to the first scope of the present invention.

These and other advantages will be more detailed from the following description of an example of an embodiment offered by way of indicative and non-limitative example with reference to the appended drawings.

### DESCRIPTION OF THE DRAWINGS

In the drawings:
Fig. 1 depicts an axonometric view of a cutting head according to the present invention installed on a schematically represented waterjet machine;
Fig. 2A depicts an axonometric view from above of a forearm for a cutting head according to the present invention;
Fig. 2B depicts an axonometric view from below of a forearm for a cutting head according to the present invention;
Fig. 3A depicts an axonometric view from above of a wrist for a cutting head according to the present invention;
Fig. 3B depicts an axonometric view from below of a wrist for a cutting head according to the present invention;
Fig. 4 depicts an axonometric view from above of an anchoring base for a cutting head according to the present invention.

### DETAILED DESCRIPTION

The following description of one or more embodiments of the invention refers to the appended drawings. The same reference numbers in the drawings identify identical or similar elements. The object of the invention is defined in the appended claims. Technical peculiarities, structures or features of the solutions described below may be combined with each other in any way.

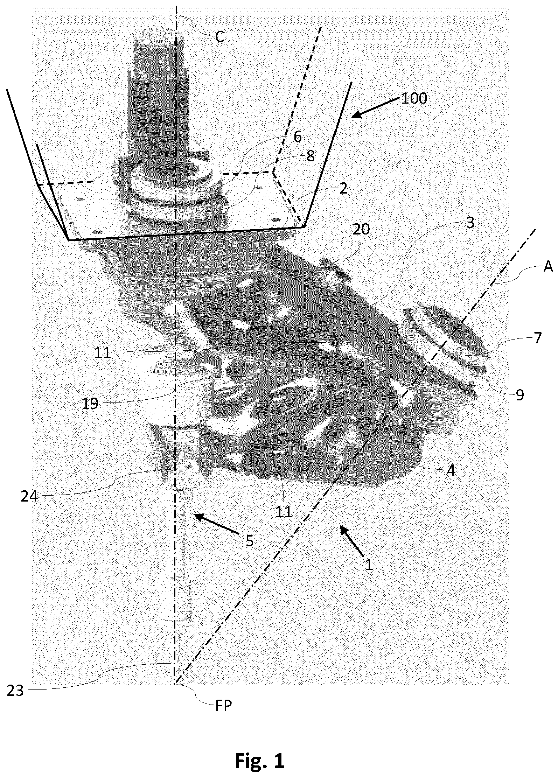

With respect to Fig. 1 a numerical control 5-axis waterjet cutting machine is represented, which is identified with reference number 100. Notably, in Fig. 1 only the portion of the machine 100 to which the cutting head 1 is connected is schematically depicted.

To allow inclined water jets the cutting machine 100 requires 5 axes, i.e. 3 axes for moving the frame to which the cutting head is attached (axes x-y-z) and 2 axes rotating on the cutting head (axes A and C).

Waterjet cutting involves extremely high water pressures and the need to adduct abrasive material within the pressurized water jet. For this reason the cutting head involves the passage of pipes and electric cables. Notably, the pipes (not depicted in Fig. 1) may be a stainless steel tube for high pressure water, at least a plastic tube for addicting abrasive, at least a plastic tube for compressed air for activating at least a solenoid valve positioned on the cutting head. The electric cables are needed for the activation/deactivation of the electric motors of the cutting head.

The bundle of tubes and cables is configured to bend and allow the rotation of the head. Nevertheless, it imposes constraints to the maximum achievable inclination angle in order not to cause pipe breakages.

The cutting head 1 comprises three main components, i.e. an anchoring base 2 which can be connected to the machine 1, a forearm 3 and a wrist 4 which can be connected to a cutting assembly 5.

The forearm 3 represents a first articulated arm of the cutting head 1, whereas the wrist 4 represents a second articulated arm of the cutting head 1.

The forearm 3 is rotatably connected to the anchoring base 2 through a first connecting rod 6, while the wrist 4 is rotatably connected to the forearm 3 through a second connecting rod 7.

The first connecting rod 6 is bound to the forearm 3 through connecting equipment (not depicted). Similarly, the second connecting rod 7 is bound to the wrist 4 through connecting equipment (not depicted).

Both the first connecting rod 6 and the second connecting rod 7 present an axial hole passing from side to side to facilitate the passage of cables/pipes.

The first connecting rod 6 comprises a flange on one end for connecting to the forearm 3. On the opposite end, the first connecting rod 6 comprises a first pulley 8.

Similarly, the second connecting rod 7 comprises a flange on one end for connecting to the wrist 4. On the opposite end, the second connecting rod 7 comprises a second pulley 9.

The first connecting rod 6 is rotatably connected to the anchoring base 2 through a thrust bearing, not visible in Fig. 1. Similarly, the second connecting rod 7 is rotatably connected to the forearm 3 through a thrust bearing, not visible in Fig. 1.

The first pulley 8 is connected through a belt to a motorized pulley (not depicted). Similarly, the second pulley 9 is connected through a belt (not depicted) to a third pulley 20 adjusted on the electric motor 19. Preferably the belts are made of fiber-reinforced plastic material. The motion transmitted to the first pulley 8 allows the rotation of the forearm 3 about the C axis, whereas the motion transmitted to the second pulley 9 allows the rotation of the wrist 4 about the A axis.

The A and C rotary axes are configured to intersect in the focal point FP, i.e. where the jet comes out of the cutting assembly 5.

The electric motor 19 is bound to the forearm 3 as better described below. Notably, the electric motor 19 is arranged on the forearm 3 so that the third pulley 20 faces the same side of the forearm 3 wherein the second pulley 9 is, and so that the axes of the two pulleys 9 and 20 are parallel to each other.

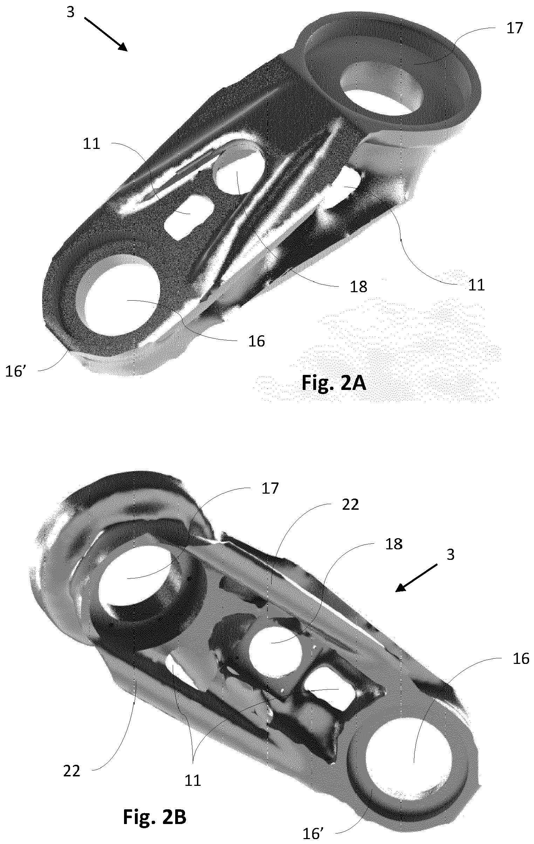

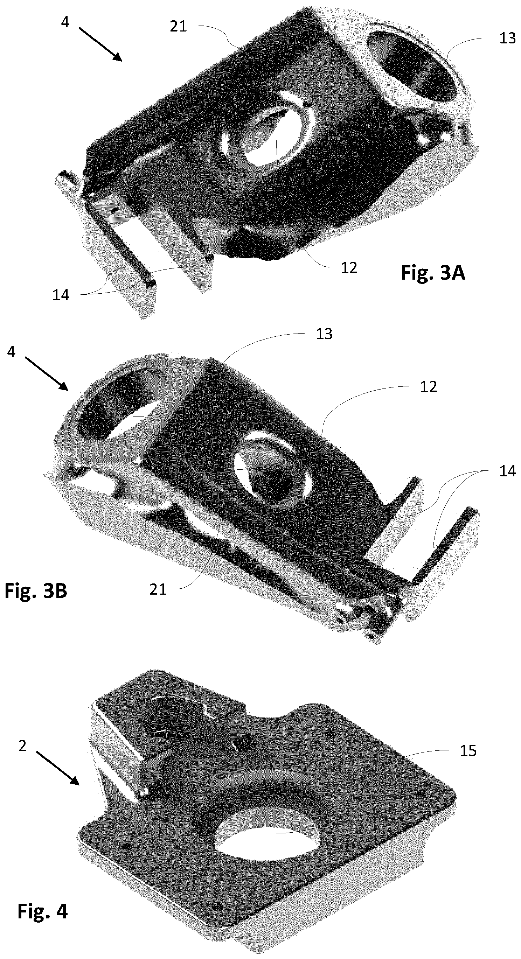

To lighten the forearm 3 and the wrist 4 and obtain a greater number of cable and pipe passage channels (not depicted), these components were optimized based on various analyses. Notably, to obtain the geometry of the forearm 3 and the wrist 4 illustrated in Fig. 2 and 3, four analysis and design steps were carried out.

In a first step, the cutting head 1 was analyzed from a kinematic point of view. The kinematics of the cutting head 1 was developed so that its movements occur around the tip of the cutting assembly, also referred to as focal point FP, and so that it reaches a maximum achievable cutting inclination angle of about 75 degrees.

In a second step, an elaboration of the mechanical structure depending on kinematic considerations was carried out. Considering the type of nozzles which can be used on the cutting head 1 the propulsion forces to which the structure of the cutting head 1 may be subjected were calculated. Notably, a mechanical sizing was carried out by applying a limit propulsion force of 1.500 N. The mechanical components, i.e. the base 2, the forearm 3 and the wrist 4 and the rods 6, 8 were thus designed by using the 3D modelling software Solidworks and by taking into account the required housings for further elements of the head 1 such as motors, thrust bearings and holes for the passage of cables.

In a third step, a confirmatory analysis of the structures obtained with the finite element method was carried out. Imposing a maximal deformation of 0.1 mm and using the Solidworks software module referred to as "Simulation". A static analysis of the deformations with subsequent verification of the safety factor was therefore carried out.

Lastly, in a fourth step a topology optimization of the elements was carried out with the aim of reducing the weight thereof, by substantially maintaining the structural rigidity unchanged. Notably, the topology optimization was carried out on the forearm 3 and on the wrist 4, being these rotating organs, the weight of which may influence the performances of the cutting head 1. The structure of the forearm 3 and of the wrist 4 was redesigned in order to remove material from the areas wherein the resistant section of the material experiences no stress or where stress is negligible.

According to the experimental data obtained, the cutting head 1 thus redesigned weights about 55% less than the equivalent head with full components.

In practice, the optimization of the forearm 3 and of the wrist 4 allows to cut in half the weight of the cutting head 1, the overall dimensions, kinematics, safety and structural strength being equal. This optimization further allows to decrease the moment of inertia of the components and therefore to increase movement speed, thus reducing the processing times of the piece to be cut.

Furthermore, the optimization of the forearm 3 and of the wrist 4 described above allows to obtain components with various empty 11 portions through which cables and/or pipes can pass, making it easier to reach the cutting assembly 5 and the other components served by said cables/pipes.

The lattice structure of the forearm 3 and of the wrist 4 is a three-dimensional lattice structure which comprises therefore full portions and empty 11 portions.

As explained before, said empty 11 portions are arranged where the section of the forearm 3 and of the wrist 4 does not substantially undergo any stress during the operation of the cutting head 1.

To obtain such a complex geometry, the forearm 3 and the wrist 4 are made via 3D printing, i.e. via one of the additive manufacturing techniques available in the prior art to print metallic materials.

Since it is preferable to make the forearm 3 and the wrist 4 of a titanium alloy, for example the Ti6AI4V alloy, it is preferable to use 3D printing techniques such as Selective Laser Melting (SLM).

Besides said empty 11 portions, the forearm 3 and the wrist 4 present further recesses and holes as better explained below.

As visible in Fig. 2A and 2B, the forearm 3 comprises a primary hole 16 used for receiving the second connecting rod 7. The primary hole 16 presents two recesses 16' on both sides of the forearm 3, to house the respective thrust bearings. The second connecting rod 7 rotates therefore inside the primary hole 16. In particular, the second pulley 9 that is integral to the second connecting rod 7 emerges from the side of the forearm 3 which does not face toward the focal point FP.

The forearm 3 further comprises a secondary hole 17 within which the first connecting rod 6 can be fixed. The first connecting rod 6 is firmly bound to the forearm 3 through connecting equipment (not depicted).

Lastly, the forearm 3 may comprise a tertiary hole 18 configured to house the drive motor 19 of the third pulley 20 which moves the second pulley 9.

The forearm 3 may further comprise two ribs 22 which are developed on the lower side thereof between the primary hole 16 and the secondary hole 17. There ribs 22 stiffen the structure and limit the twisting of the forearm 3.

As depicted in Fig. 3A and 3B, the wrist 4 comprises a first hole 13 for anchoring the second connecting rod 7. The second connecting rod 7 is firmly bound to the wrist 4 through connecting equipment (not depicted).

The wrist 4 further comprises a clamping portion 14 conformed for connecting to the cutting assembly 5.

The cutting assembly 5 is of a known type and comprises the water jet expulsion nozzle and the entrance for adducing the abrasive material.

The wrist 4 may further comprise a stiffening rib 21 which is developed on the upper side from the clamping portion 14 to the area of the wrist 4 wherein the first hole 13 is.

Lastly, the wrist 4 may comprise a second hole 12 for the passage of cables/pipes.

As depicted in Fig. 4, the anchoring base 2 comprises a central hole 15 for receiving the first connecting rod 6.

The lower side of the anchoring base 2 may comprise a recess (not depicted) within which a thrust bearing which faces towards the forearm 3 is arranged.

The anchoring base is preferably made of the same titanium alloy of which the forearm 3 and the wrist 4 are made.

In conclusion, it is clear that the invention thus devised is susceptible to several modifications or variations, all within the invention; all details are further substitutable by technically equivalent elements. In practice, the quantities may vary according to technical requirements.

## Claims

1. Cutting head (1) for 5-axis waterjet cutting machine comprising an anchoring base (2), a forearm (3) and a wrist (4);
the anchoring base (2) is rotatably coupled to a forearm (3) which in turn is rotatably coupled to a wrist (4) and is configured to support a cutting assembly (5);
the forearm (3) rotates with respect to the anchoring base (2) about a first rotary axis (C) and the wrist (4) rotates with respect to the forearm (3) about a second rotary axis (A);
wherein the forearm (3) and the wrist (4) have a lattice structure comprising full portions and empty (11) portions through which one or more cables/pipes pass.

2. Cutting head (1) according to claim 1, wherein the anchoring base (2) is rotatably coupled to the forearm (3) through a first connecting rod (6) that is axially holed for allowing the passage of cables/pipes, preferably the first connecting rod (6) is firmly coupled to forearm (3) and rotatably coupled to the anchoring base (2).

3. Cutting head (1) according to claim 1 or 2, wherein the forearm (3) is rotatably coupled to the wrist (4) through a second connecting rod (7) that is axially holed for allowing the passage of cables/pipes, preferably the second connecting rod (7) is firmly coupled to wrist (4) and rotatably coupled to the forearm (3).

4. Cutting head (1) according to any one of preceding claims, wherein the anchoring base (2) comprises a central hole (15) for receiving the first connecting rod (6) so that a first pulley (8) connected to the first connecting rod (6) comes out from the anchoring base (2), preferably the anchoring base (2) is made of a titanium alloy.

5. Cutting head (1) according to any one of preceding claims, wherein the wrist (4) comprises a first hole (13) for anchoring the second connecting rod (7), a second hole (12) for the passage of cables/pipes and a clamping portion (14) for connecting the cutting assembly (5).

6. Cutting head (1) according to any one of preceding claims, wherein the forearm (3) comprises a primary hole (16) for receiving the second connecting rod (7) so that a second pulley (9) connected to the second connecting rod (7) comes out from the forearm (3), a secondary hole (17) for anchoring the first connecting rod (6) and a tertiary hole (18) configured for receiving a motor (19) so that a third pulley (20) driven by the motor (19) and coupled through a transmission to the second pulley (9) comes out from the forearm (3).

7. Cutting head (1) according to any one of preceding claims, wherein the forearm (3) and the wrist (4) are made of a titanium alloy.

8. Cutting head (1) according to any one of preceding claims, wherein the forearm (3) and the wrist (4) are realized through three-dimensional printing.

9. Cutting head (1) according to any one of preceding claims, wherein the first rotary axis (C) intersects the second rotary axis (A) in a focal point (FP) of the cutting assembly (5).

10. A 5-axis waterjet cutting machine (100) comprising a cutting head (1) according to any one of preceding claims.
